(19)

Europäisches
Patentamt
European
Patent Office
Office européen
des brevets

(11) **EP 3 248 778 A1**

(12) **EUROPEAN PATENT APPLICATION**
published in accordance with Art. 153(4) EPC

(43) Date of publication:
**29.11.2017 Bulletin 2017/48**

(21) Application number: **16740373.2**

(22) Date of filing: **19.01.2016**

(51) Int Cl.:
**B32B 27/26** *(2006.01)*          **B32B 7/06** *(2006.01)*
**B32B 7/12** *(2006.01)*          **B32B 37/24** *(2006.01)*
**B44C 5/04** *(2006.01)*

(86) International application number:
**PCT/KR2016/000536**

(87) International publication number:
**WO 2016/117900 (28.07.2016 Gazette 2016/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **23.01.2015 KR 20150011345**

(71) Applicant: **LG Hausys, Ltd.**
**Seoul 07326 (KR)**

(72) Inventors:
• **PARK, Ji-Yong**
  **Gimhae-si**
  **Gyeongsangnam-do 51003 (KR)**
• **ROH, Byung-Hyun**
  **Ulsan 44658 (KR)**

(74) Representative: **Wynne-Jones, Lainé and James
LLP**
**Essex Place
22 Rodney Road
Cheltenham
Gloucestershire GL50 1JJ (GB)**

(54) **DECORATION SHEET FOR VACUUM THERMOFORMING, PRODUCT MADE USING SAME, AND METHOD FOR MANUFACTURING DECORATION SHEET FOR VACUUM THERMOFORMING**

(57)     Provided are a decoration sheet for vacuum thermoforming, which comprises a photocurable embossing layer, a printing layer, a substrate layer, and an adhesive layer, and a product made by attaching the decoration sheet to an injection-molded product. Further, a method for manufacturing the decoration sheet for vacuum thermoforming is provided.

FIG. 1

EP 3 248 778 A1

**Description**

[Technical Field]

The present disclosure relates to a decoration sheet for vacuum thermoforming and an article formed using the same, and to a method for manufacturing the decoration sheet for vacuum thermoforming.

[Background Art]

Generally, for various decorations, a surface of an injection molded produced product has been given a design using a painting method, a water transfer method, an insert molding method, or the like. However, since the water transfer method or the insert molding method has limitations in forming an embossed pattern on the surface to give a surface texture, it is difficult to realize various designs. As a method for imparting a surface texture, a decoration sheet may be used. Such decoration sheet can be attached to an injection molded produced product through an adhesive or the like to realize various designs. If a surface texture is intended to be imparted through an embossing pattern, such decoration sheet will have an embossed pattern, which is usually heated to pass through an embossing roll, or may be formed by a method of heating and foaming a sol. In order for a finished article having the decoration sheet to have a good surface texture, the embossed pattern should not be damaged in the molding process. Therefore, researches are required to prevent the surface texture from being impaired while the decoration sheet is firmly attached to the finished article.

[Disclosure]

[Technical Problem]

One aspect of the present disclosure is to provide a decoration sheet for vacuum thermoforming which is excellent in adhesive strength and excellent in a depth holding performance of embossing in a molding process under high temperature and vacuum.
Another aspect of the present disclosure is to provide an article having excellent durability and surface texture by forming using the decoration sheet.
Still another aspect of the present disclosure is to provide a method for manufacturing a decoration sheet for vacuum thermoforming which is excellent in a depth holding performance of embossing in a molding process under high temperature and vacuum and which realizes an improved adhesion performance.

[Technical Solution]

An embodiment of the present disclosure provides a decoration sheet for vacuum thermoforming, which includes a photocurable embossing layer, a printing layer, a substrate layer, and an adhesive layer.
The photocurable embossing layer may be formed by printing a photocurable resin composition by a rotary screen method and then curing the photocurable resin composition.
The photocurable resin composition may include a polyfunctional urethane acrylate oligomer, a monofunctional acrylate monomer, and a photoinitiator.
The photocurable resin composition may include 5 to 15 parts by weight of the monofunctional acrylate monomer based on 100 parts by weight of the polyfunctional urethane acrylate oligomer.
The polyfunctional urethane acrylate oligomer may be a tetrafunctional to hexafunctional urethane acrylate oligomer.
The polyfunctional urethane acrylate oligomer may have a weight average molecular weight of 1,000 to 5,000.
The monofunctional acrylate monomer may be a monofunctional phenyl epoxy acrylate monomer.
The photocurable resin composition may have a viscosity of 7000 cps to 15000 cps.
The photocurable embossing layer may include an embossing pattern having an average depth of 10 $\mu$m to 100 $\mu$m.
The substrate layer may include at least one selected from the group consisting of polymethylmethacrylate (PMMA), acrylonitrile-butadiene-styrene (ABS), thermoplastic polyolefin (TPO), polyvinyl chloride (PVC), polycarbonate (PC), and combinations thereof.
The adhesive layer may include at least one selected from the group consisting of a urethane-based adhesive, an acrylic adhesive, a polyester-based adhesive, and combinations thereof.
The adhesive layer may have a thickness of 30 $\mu$m to 50 $\mu$m.
The adhesive layer may further include a release film layer on one side of the adhesive layer.
The release film layer may include a polyethylene terephthalate (PET) film.

The photocurable embossing layer may have an average depth retention rate according to the following general formula (1) of more than 50% and less than or equal to 100%.

[Formula 1]

Average Depth Retention Rate (%) = Later Average Depth / Initial Average Depth

X 100

wherein the initial average depth refers to an average depth of the photocurable embossing layer measured before the vacuum thermoforming of the decoration sheet at a temperature of 100°C to 150°C and a pressure of $10^{-4}$ torr or less, and the later average depth refers to an average depth measured after vacuum thermoforming the decoration sheet at the above temperature and pressure.

In another aspect of the present disclosure, there is provided an article formed by attaching the decoration sheet for vacuum thermoforming to an injection molded product.

The article may be formed by attaching the decoration sheet to the injection molded product by a vacuum thermoforming method at a temperature of 100°C to 150°C and a pressure of $10^{-4}$ torr or less.

In still another aspect of the present disclosure, there is provided a method for manufacturing a decoration sheet for vacuum thermoforming, which includes forming a printing layer on a substrate layer; printing a photocurable resin composition on the printing layer by a rotary screen method and photocuring the photocurable resin composition to form a photocurable embossing layer; forming an adhesive layer on a release film layer; and laminating the adhesive layer and the substrate layer.

In the step of forming the photocurable embossing layer, the photocurable resin composition may be photocured at a light energy of 500 mJ to 1000 mJ.

[Advantageous Effects]

The decoration sheet for vacuum thermoforming is easy to maintain an embossing pattern in a high temperature vacuum thermoforming process, thereby achieving the characteristics of excellent surface texture and adhesiveness.

In addition, the article manufactured using the above-mentioned decoration sheet for vacuum thermoforming can have excellent durability and surface texture.

Further, through the above method of manufacturing a decoration sheet for vacuum thermoforming, the decoration sheet having excellent durability and having excellent tackiness and surface texture simultaneously can be obtained.

[Description of Drawings]

FIG. 1 schematically shows a cross section of a decoration sheet for vacuum thermoforming according to an embodiment of the present disclosure.
FIG. 2 schematically shows a cross section of the photo-cured embossing layer in the decoration sheet for vacuum thermoforming.

[Best Mode]

Advantages and features of the present disclosure and methods of achieving them will become apparent with reference to the embodiments described hereinafter. However, it will be understood that the present disclosure is not limited to the embodiments disclosed herein, but may be embodied in many different forms. Further, the embodiments disclosed herein should not be construed as limiting the present disclosure set forth herein, and thus the present disclosure is only defined by the scope of the claims. Like reference numerals refer to like elements throughout the specification.

In the drawings, the thicknesses are enlarged to clearly indicate layers and regions. Further, in the drawings, for the convenience of explanation, the thicknesses of some layers and regions are exaggerated.

In addition, in this specification, when a layer, film, region, plate, or the like is referred to as being "on" or "above" another region, this includes not only the case where it is "directly on" another part but also the case where there is another part in the middle. Conversely, when a part is "directly above" another part, it means that there is no other part in the middle. In addition, when a layer, film, region, plate, or the like is referred to as being "under" or "beneath" another region, this includes not only the case where it is "directly under" another part but also the case where there is another part in the middle. Conversely, when a part is "directly under" another part, it means that there is no other part in the middle.

Hereinafter, a decoration sheet for vacuum thermoforming according to an embodiment of the present disclosure will be described with reference to the accompanying drawings.

An embodiment of the present disclosure provides a decoration sheet for vacuum thermoforming, which includes a photocurable embossing layer, a printing layer, a substrate layer, and an adhesive layer.

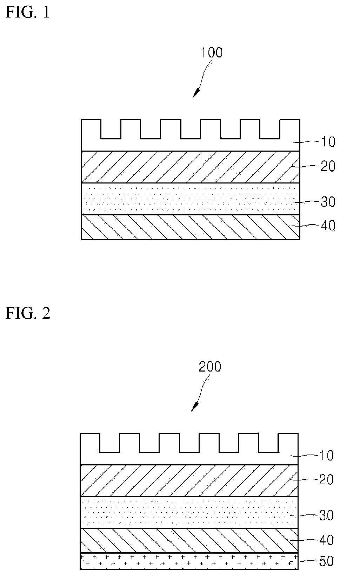

FIG. 1 schematically shows a cross section of a decoration sheet 100 for vacuum thermoforming. Referring to FIG. 1, the decoration sheet 100 for vacuum thermoforming may have a structure in which a photocurable embossing layer 10, a printing layer 20, a substrate layer 30, and an adhesive layer 40 are sequentially laminated.

The decoration sheet for vacuum thermoforming is used for decorating various interior and exterior materials such as automobiles, furniture, etc., and can be attached to such interior and exterior material by a vacuum thermoforming method. The vacuum thermoforming may be carried out under high temperature and vacuum conditions. In this process, it is important that the functional and physical properties of the decoration sheet are not impaired.

The decoration sheet 100 for vacuum thermoforming includes a photocurable embossing layer 10 so that the photocurable embossing layer is not damaged even when subjected to vacuum thermoforming under high temperature and vacuum conditions, thereby achieving excellent surface texture and durability at the same time.

Specifically, the photocurable embossing layer 10 may be formed by printing a photocurable resin composition by a rotary screen method, followed by photocuring. The rotary screen method is a method in which the photocurable resin composition is applied to a roll having an embossing pattern, and then rolled to form the embossing pattern simultaneously with application. Then, the photocurable embossing layer 10 can be formed by photocuring the photocurable resin composition printed by the rotary screen method.

The photocurable resin composition is a resin composition which is cured by irradiation with light energy, and may include a polyfunctional urethane acrylate oligomer, a monofunctional acrylate monomer, and a photoinitiator.

In this embodiment, the photocurable resin composition may include 5 to 15 parts by weight of the monofunctional acrylate monomer based on 100 parts by weight of the polyfunctional urethane acrylate oligomer. When the content of the monomer satisfies the above range, an appropriate cured structure may be formed by photocuring together with the oligomer, and the photocurable embossing layer may easily realize good surface physical properties and embossed shapes.

In this embodiment, the polyfunctional urethane acrylate oligomer may be specifically a tetrafunctional to hexafunctional urethane acrylate oligomer, which may be advantageous to improve adhesion and chemical resistance.

The polyfunctional urethane acrylate oligomer may have a weight average molecular weight (Mw) of about 1,000 to about 5,000, such that the photocurable embossing layer can easily exhibit appropriate surface strength and elongation properties.

In addition, the monofunctional acrylate monomer may be a monofunctional phenyl epoxy acrylate monomer. In this case, a high elongation can be obtained with good adhesion and chemical resistance.

The photoinitiator initiates a cure reaction by irradiation with light energy and can be used in an appropriate amount without being limited to any kind usually used in the art.

The photocurable resin composition may have a viscosity of about 7000 cps to about 15000 cps. Within this range, the embossed pattern printed with the rotary screen method and having an appropriate average depth can be formed, and the embossing pattern can be maintained without being damaged until photo-cured after printing.

The photocurable embossing layer may be formed by printing a photocurable resin composition by a rotary screen method, followed by photocuring, which is easier in a continuous process than the case of using another printing or coating method such as a press method, and thus the working efficiency can be improved. Further, in the process of vacuum thermoforming using the decoration sheet, an embossing pattern can be obtained maintaining uniform physical properties and shapes without damaging the photocurable embossing layer.

The average depth of the embossing pattern may be from about 10 $\mu$m to about 100 $\mu$m, for example, from about 20 $\mu$m to about 40 $\mu$m. The photocurable embossing layer may be formed by printing a photocurable resin composition by a rotary screen method, followed by photocuring, such that the embossing pattern having an average depth in the above-mentioned range can be produced, thereby securing an excellent surface texture.

Referring to FIG. 1, the decoration sheet 100 for vacuum thermoforming includes a printing layer 20, and specifically the printing layer 20 may be under the photocurable embossing layer 10.

The printing layer 20 directly imparts an aesthetic effect through the decoration sheet. The printing layer 20 can be manufactured by selecting various raw materials and printing methods as needed to form a printed pattern. For example, the printing layer may be produced by using a printing method.

The printing layer 20 may have a thickness of about 1 $\mu$m to about 5 $\mu$m. When the thickness of the printing layer satisfies the above range, the entire thickness of the decoration sheet can be appropriately maintained while exhibiting a clear printed pattern.

The printing layer 20 may be coated with a surface treatment agent directly thereon. That is, the decoration sheet 100 for vacuum thermoforming may further include a coating layer formed by the surface treatment agent between the photocurable embossing layer 10 and the printing layer 20.

Specifically, the coating layer by the surface treatment agent may protect the printed pattern of the printing layer, increase the adhesion of the printing layer and the photocurable embossing layer, and improve the chemical resistance and scratch resistance.

To this end, the surface treatment agent may include an acrylic surface treatment agent, and the coating method may be a gravure coating method or a microgravure coating method.

The decoration sheet 100 for vacuum thermoforming may include a substrate layer 30 under the printing layer 20. The substrate layer 30 serves as a center of the decoration sheet for vacuum thermoforming, and can exhibit excellent durability while securing excellent heat resistance in a vacuum thermoforming process.

Specifically, the substrate layer 30 may include at least one selected from the group consisting of polymethylmethacrylate (PMMA), acrylonitrile-butadiene-styrene (ABS), thermoplastic polyolefin (TPO), polyvinyl chloride (PVC), polycarbonate (PC), and combinations thereof.

For example, the substrate layer 30 may include acrylonitrile-butadiene-styrene (ABS), which can allow both good moldability and heat resistance, and when applied to an article through vacuum thermoforming, excellent adhesion can be achieved.

The substrate layer 30 may be formed of a transparent substrate layer or a colored substrate layer. When the substrate layer is formed of a colored substrate layer, a pigment may be added to the above components.

The substrate layer 30 may have a thickness of about 100 $\mu$m to about 200 $\mu$m. When the thickness of the substrate layer satisfies the above range, excellent heat resistance can be obtained in the process of vacuum thermoforming of the decoration sheet while ensuring excellent durability as a center substrate.

The decoration sheet 100 for vacuum thermoforming may include an adhesive layer 40 under the substrate layer 30. The adhesive layer 40 is a layer directly attached to the surface of an article when the article is produced by vacuum thermoforming using the decoration sheet 100.

The adhesive layer 40 may include at least one selected from the group consisting of a urethane-based adhesive, an acrylic adhesive, a polyester-based adhesive, and combinations thereof.

For example, the adhesive layer may include a urethane-based adhesive. In this case, the adhesive layer exhibits excellent adhesiveness and adheres to the surface of a curved injection molded product through vacuum thermoforming, thereby ensuring more excellent adhesion at the time of manufacturing the article. Further, for example, when the injection molded product to which the adhesive layer is directly attached is formed of any one of acrylonitrile-butadiene-styrene (ABS), polycarbonate (PC), and polyvinyl chloride (PVC), it is possible to achieve improved adhesion and ensure excellent durability.

In addition, the adhesive layer may have a thickness of about 30 $\mu$m to about 50 $\mu$m. When the thickness of the adhesive layer is less than about 30 $\mu$m, the adhesion to an injection molded product having a deep molding depth may have a weaker side adhesion. When exceeds about 50 $\mu$m, bubbles are excessively generated at the time of coating the adhesive for forming the adhesive layer, and as a result, the total adhesion may be deteriorated.

That is, when the thickness of the adhesive layer satisfies the above range, it is possible to exhibit excellent adhesion on the entire surface even with a curved surface and to easily achieve an excellent adhesion in the process of vacuum thermoforming using the decoration sheet to thereby obtain an improved durability.

FIG. 2 schematically shows a cross section of a decoration sheet 200 for vacuum thermoforming according to another embodiment of the present disclosure.

Referring to FIG. 2, the decoration sheet 200 for vacuum thermoforming may further include a release film layer 50 under the adhesive layer 40. The release film layer 50 is peeled off before the decoration sheet is used in the vacuum thermoforming, and serves to facilitate distribution and transportation of the decoration sheet 100.

Specifically, the release film layer 50 may include polyethylene terephthalate (PET), and more specifically, a polyethylene terephthalate (PET) coated with a silicone coating agent may be used.

In this embodiment, when the adhesive layer 40 is formed on the release film layer 50, excellent coating properties of the adhesive can be obtained. In the process of laminating the adhesive layer 40 and the substrate layer 30, excellent heat resistance can be exhibited, and when the release film layer 50 is removed later, the release may be performed well.

The release film layer 50 may have a thickness of about 25 $\mu$m to about 75 $\mu$m. When the thickness of the release film layer is within the above range, peeling can easily be performed, and it is possible to secure an excellent workability and heat resistance in the process of forming an adhesive layer on the upper side thereof or laminating the adhesive layer and the substrate layer.

The decoration sheet 100 for vacuum thermoforming is used for decorating the surface of an article by vacuum thermoforming under high temperature and low pressure conditions. In this process, the functional and physical properties of each layer are not impaired, but excellent maintenance performance can be realized.

Specifically, the photocurable embossing layer 10 has a small change in the average depth before and after the vacuum thermoforming, and can impart a good surface texture to a final article manufactured through the vacuum thermoforming.

More specifically, when the average depths before and after vacuum thermoforming of the decoration sheet at a temperature of about 100°C to about 150°C and a pressure of about $10^{-4}$ torr or less are defined as an initial average depth and a later average depth, respectively, the average depth retention rate (%) according to Formula 1 below may be greater than about 50% and less than or equal to about 100%, for example, from about 80% to about 100%.

[Formula 1]

$$\text{Average Depth Retention Rate (\%) = Later Average Depth / Initial Average Depth}$$

$$\times 100$$

When using a molding method which can be performed in a lower temperature range instead of the vacuum thermoforming method in the above temperature and pressure ranges, it is easy to maintain the average depth of the embossing, but the adhesion of the article and the decoration sheet may be deteriorated and the durability may become weak. Accordingly, the decoration sheet 100 for vacuum thermoforming can impart excellent durability and surface texture simultaneously to a final article to which the decoration sheet 100 is applied through the photocurable embossing layer 10.

Another aspect of the present disclosure provides an article formed by attaching the decoration sheet for vacuum thermoforming to an injection molded product.

Specifically, the article may be obtained by attaching the decoration sheet to the injection molded product by a vacuum thermoforming method at a temperature of 100°C to 150°C and a pressure of $10^{-4}$ torr or less.

The article is manufactured by attaching the decoration sheet to an injection molded product by a vacuum thermoforming method, and can provide excellent durability and surface texture at the same time, and the use thereof is not particularly limited.

Specifically, the injection molded product is a skeleton of an article, and generally represents a structure having a predetermined shape of resin or plastic material, and the article may be manufactured by arranging the injection molded product and the decoration sheet at appropriate positions and then adjusting an ambient temperature and pressure to appropriate conditions so that the decoration sheet can be adhered firmly to the injection molded product.

In this embodiment, the temperature and pressure of the molding process for attaching the decoration sheet to the injection molded product can be controlled not only under low temperature and atmospheric pressure but also under high temperature and vacuum conditions within the above-described range, and, even in the molding process under such severe conditions, the embossing of the photocurable embossing layer can be effectively maintained by using the decoration sheet.

The injection molded product may include a curved surface. When the injection molded product has a curved shape, excellent adhesion can be realized in the course of manufacturing an article by attaching the decoration sheet. For example, when the decoration sheet is attached to the injection molded product at a temperature of 100°C to 150°C and a pressure of $10^{-4}$ torr or less, the decoration sheet can be attached firmly to the injection molded product, and the shape and depth of the embossing pattern of the decoration sheet can be maintained effectively.

The injection molded product may be produced using at least one selected from the group consisting of acrylonitrile-butadiene-styrene (ABS), polycarbonate (PC), polyvinyl chloride (PVC), and combinations thereof. When the injection molded product includes such material, it can exhibit excellent adhesion with the adhesive layer in the decoration sheet and can be vacuum thermoformed under the temperature and pressure together with the decoration sheet so that the curved portion thereof adheres well to ensure the physical properties of smooth surface.

As described above, the photocurable embossing layer of the decoration sheet exhibits excellent average depth retention performance, despite being vacuum thermoformed in the above temperature and pressure ranges. Therefore, the article manufactured using the same can have excellent durability and surface texture at the same time.

Further aspect of the present disclosure provides a method for manufacturing a decoration sheet for vacuum thermoforming, which may include forming a printing layer on a substrate layer; printing a photocurable resin composition on the printing layer by a rotary screen method and photocuring the photocurable resin composition to form a photocurable embossing layer; forming an adhesive layer on a release film layer; and laminating the adhesive layer and the substrate layer.

The decoration sheet for vacuum thermoforming may be produced by the method for producing a decoration sheet for vacuum thermoforming, which includes the photocurable embossing layer, the printing layer, the substrate layer and the adhesive layer, and each layer is firmly bonded each other to obtain a decoration sheet having excellent durability. The descriptions relating to each layer are as described above.

The method includes forming a printing layer on a substrate layer, and, specifically, the above step may be performed by preparing a raw material for forming various printing patterns as required, and then printing the same on the substrate layer by a gravure process.

The method may further include forming a coating layer using a surface treatment agent on the printing layer. The descriptions relating to the surface treatment agent are as described above. Specifically, the coating layer may be formed by coating the surface treatment agent by a gravure coating method or a microgravure coating method.

When a photocurable embossing layer is formed on the printing layer by further forming a coating layer on the printing layer, excellent workability and adhesion can be obtained and the printing layer can be effectively protected to maximize an aesthetic effect. Thus, the decoration sheet produced by the manufacturing method can exhibit excellent durability.

The method for manufacturing a decoration sheet for vacuum thermoforming may include the step of forming a photocurable embossing layer on the printing layer. In this embodiment, the photocurable embossing layer may be formed by printing a photocurable resin composition by a rotary screen method and then curing the photocurable resin composition, and the descriptions relating to the photocurable resin composition and the rotary screen method are as described above.

In the step of forming the photocurable embossing layer, by using a photo-curing, the average depth retention performance can be improved when the vacuum thermoforming is performed as compared with the case of using other methods such as heating foaming, and, by printing the photocurable resin composition by a rotary screen method, an embossing pattern having an excellent surface texture can be formed.

Specifically, the photocurable resin composition printed to have embossing pattern by the rotary screen method may have a viscosity of about 7000 cps to about 15000 cps, so that the embossing pattern can be effectively retained, and an average depth for imparting excellent surface texture due to photo-curing may be formed.

The photocurable resin composition may be photo-cured at a light energy of about 500 mJ to about 1000 mJ. Specifically, the photocurable resin composition may be a resin composition which is cured by ultraviolet rays, and the photocurable resin composition may be photo-cured with the light energy within the above range, thereby securing an appropriate degree of curing, and giving an excellent surface texture to the decoration sheet. Subsequently, when the decoration sheet is attached to an injection molded product under high temperature and vacuum conditions, excellent embossing holding performance can be achieved.

The method for manufacturing a decoration sheet for vacuum thermoforming may include forming an adhesive layer on the release film layer. The adhesive layer is a layer which is in contact with the substrate layer in the resulting decoration sheet, and when the adhesive layer is formed directly below the substrate layer, the coating property may be poor. Therefore, in the above manufacturing method, the adhesive layer may be formed on a separate release film layer so that the adhesive layer has a uniform thickness and density.

Specifically, the release film layer may include polyethylene terephthalate (PET), and more specifically, a polyethylene terephthalate (PET) coated with a silicone coating agent may be used. In addition, the adhesive layer may include an acrylic adhesive or a urethane-based adhesive, and specifically a urethane-based adhesive.

In this embodiment, the adhesive layer can be formed by applying and drying the urethane-based adhesive on an upper surface of the polyethylene terephthalate (PET) release film layer coated with the silicone coating agent, and, as a result, the adhesive layer is formed with a uniform thickness and density, and thus excellent adhesion and durability can be imparted.

The method may include a step of laminating the adhesive layer and the substrate layer. Specifically, the step may be a step of laminating a stack structure of the release film layer and the adhesive layer with a stack structure of the substrate layer, the printing layer and the photocurable embossing layer, such that the adhesive layer and the substrate layer can be in contact with each other.

Hereinafter, specific examples of the present disclosure will be described. It is to be understood, however, that the examples described below are only for illustrative purposes or to illustrate the present disclosure, and the present disclosure should not be construed as being limited thereto.

**Examples and Comparative Examples**

Example 1

A printing layer having a thickness of 2 μm was formed on a polymethyl methacrylate (PMMA) substrate layer having a thickness of 120 μm through a gravure printing method, and the printing layer was coated with an acrylic surface treatment agent. Then, a photocurable resin composition comprising 10 parts by weight of a monofunctional phenyl epoxy acrylate monomer and 1 part by weight of a benzophenone photoinitiator based on 100 parts by weight of a hexafunctional urethane acrylate oligomer having a weight average molecular weight (Mw) of 1000 was prepared, and the photocurable resin composition was printed with embossing patterns on an upper surface of the printing layer using a rotary screen method and then photocured using light energy of 700 mJ to form a photocurable embossing layer having an average depth of 16.53 $\mu$m. Further, a release film layer having a thickness of 50 $\mu$m and formed of polyethylene terephthalate (PET) having a silicone coating thereon was prepared, and an urethane-based adhesive was applied to an upper surface of the release film layer by a comma coating method to prepare an adhesive layer having a thickness of 30 $\mu$m. Then, a decoration sheet for vacuum thermoforming was produced by laminating the adhesive layer on the lower surface of the substrate layer.

Comparative Example 1

A decoration sheet was manufactured in the same manner as in Example 1 above, except that a printing layer having a thickness of 2 $\mu$m was formed on a polymethyl methacrylate (PMMA) substrate layer having a thickness of 120 $\mu$m through a gravure printing method, and a thermosetting one-pack type acrylic resin composition was applied to an upper surface of the printing layer using a gravure coating method, and the roll with the embossing pattern was pressed by applying heat at 200°C to form an embossing layer having an average depth of 28.78 $\mu$m.

Comparative Example 2

A decoration sheet was manufactured in the same manner as in Example 1 above, except that a sol containing a PVC resin and a foaming agent was printed on an upper surface of the printing layer by a rotary screen method and heated at 220°C to foam a sol to thereby form an embossing layer having an average depth of 50.25 $\mu$m.

**Evaluations**

Experimental Example 1: Measurement of Average Depth Retention Rate (%)

The average depth of each embossing layer at room temperature immediately after the production was measured and defined as an initial average depth for the decoration sheet of the examples and comparative examples. Then, the release film layer of the decoration sheet was removed, and the adhesive layer was vacuum thermoformed to adhere to an article at a temperature of 140°C and a pressure of $10^{-5}$ torr, and the average depth of each embossing layer was then measured and defined as a later average depth. The average depth retention ratio (%) was measured by the following formula 1. The initial average depth, the later average depth and the average depth retention ratio (%) of each embossing layer are shown in Table 1 below.

[Formula 1]

$$\text{Average Depth Retention Rate (\%) = Later Average Depth / Initial Average Depth} \times 100$$

Table 1

|  | Initial Average Depth [$\mu$m] | Later Average Depth [$\mu$m] | Average depth retention rate (%) |
|---|---|---|---|
| Ex. 1 | 16.53 | 13.93 | 85 |
| C. Ex. 1 | 28.78 | 9.12 | 31 |
| C. Ex. 2 | 50.25 | 10.15 | 20 |

Referring to the results of Table 1 above, the decoration sheet of Example 1 included the photocurable embossing layer by a rotary screen method and a photo-curing method, and as compared to Comparative Example 1 using the above-mentioned thermosetting method or Comparative Example 2 using the heating foaming method, it shows an excellent average depth retention rate under high temperature processing. As a result, it can be seen that even when formed under severe conditions, the embossing performance is excellent, and durability and surface texture are excellent.

[Description of Symbols]

100, 200: Decoration sheet for vacuum thermoforming
10: Photocurable embossing layer
20: Printing layer
30: Substrate layer
40: Adhesive layer
50: Release film layer

**Claims**

1. A decoration sheet for vacuum thermoforming, comprising a photocurable embossing layer, a printing layer, a substrate layer, and an adhesive layer.

2. The decoration sheet for vacuum thermoforming of claim 1, wherein the photocurable embossing layer is formed by printing a photocurable resin composition by a rotary screen method and then curing the photocurable resin composition.

3. The decoration sheet for vacuum thermoforming of claim 2, wherein the photocurable resin composition comprises a polyfunctional urethane acrylate oligomer, a monofunctional acrylate monomer, and a photoinitiator.

4. The decoration sheet for vacuum thermoforming of claim 3, wherein the photocurable resin composition comprises 5 to 15 parts by weight of the monofunctional acrylate monomer based on 100 parts by weight of the polyfunctional urethane acrylate oligomer.

5. The decoration sheet for vacuum thermoforming of claim 3, wherein the polyfunctional urethane acrylate oligomer is a tetrafunctional to hexafunctional urethane acrylate oligomer.

6. The decoration sheet for vacuum thermoforming of claim 3, wherein the polyfunctional urethane acrylate oligomer has a weight average molecular weight of 1,000 to 5,000.

7. The decoration sheet for vacuum thermoforming of claim 3, wherein the monofunctional acrylate monomer is a monofunctional phenyl epoxy acrylate monomer.

8. The decoration sheet for vacuum thermoforming of claim 2, wherein the photocurable resin composition has a viscosity of 7000 cps to 15000 cps.

9. The decoration sheet for vacuum thermoforming of claim 4, wherein the photocurable embossing layer comprises an embossing pattern having an average depth of 10 $\mu$m to 100 $\mu$m.

10. The decoration sheet for vacuum thermoforming of claim 1, wherein the substrate layer comprises at least one selected from the group consisting of polymethylmethacrylate (PMMA), acrylonitrile-butadiene-styrene (ABS), thermoplastic polyolefin (TPO), polyvinyl chloride (PVC), polycarbonate (PC), and combinations thereof.

11. The decoration sheet for vacuum thermoforming of claim 1, wherein the adhesive layer comprises at least one selected from the group consisting of a urethane-based adhesive, an acrylic adhesive, a polyester-based adhesive, and combinations thereof.

12. The decoration sheet for vacuum thermoforming of claim 1, wherein the adhesive layer has a thickness of 30 $\mu$m to 50 $\mu$m.

13. The decoration sheet for vacuum thermo forming of claim 1, wherein the adhesive layer further comprises a release film layer on one side thereof.

14. The decoration sheet for vacuum thermo forming of claim 13, wherein the release film layer comprises a polyethylene terephthalate (PET).

15. The decoration sheet for vacuum thermo forming of claim 1, wherein the photocurable embossing layer has an average depth retention rate according to the following formula (1) of more than 50% and less than or equal to 100%:

[Formula 1]

$$\text{Average Depth Retention Rate (\%)} = \text{Later Average Depth} / \text{Initial Average Depth}$$

$$X\ 100$$

wherein the initial average depth means an average depth of the photocurable embossing layer measured before the vacuum thermoforming of the decoration sheet at a temperature of 100°C to 150°C and a pressure of $10^{-4}$ torr or less, and the later average depth means an average depth measured after vacuum thermoforming the decoration sheet at the above temperature and pressure.

16. An article formed by attaching the decoration sheet for vacuum thermoforming according to any one of claims 1 to 15 to an injection molded product.

17. The article of claim 16, wherein the article is formed by attaching the decoration sheet to the injection molded product by a vacuum thermoforming method at a temperature of 100°C to 150°C and a pressure of $10^{-4}$ torr or less.

18. A method for manufacturing a decoration sheet for vacuum thermoforming, comprising:

forming a printing layer on an upper surface of a substrate layer;
printing a photocurable resin composition on an upper surface of the printing layer by a rotary screen method, followed by photocuring, to form a photocurable embossing layer;
forming an adhesive layer on an upper surface of a release film layer; and
laminating the adhesive layer and the substrate layer.

19. The method for manufacturing a decoration sheet for vacuum thermoforming of claim 18, wherein, in the step of forming the photocurable embossing layer, the photocurable resin composition is photocured at a light energy of 500 mJ to 1000 mJ.

FIG. 1

FIG. 2

## INTERNATIONAL SEARCH REPORT

| | International application No. |
|---|---|
| | **PCT/KR2016/000536** |

**A. CLASSIFICATION OF SUBJECT MATTER**

*B32B 27/26(2006.01)i, B32B 7/06(2006.01)i, B32B 7/12(2006.01)i, B32B 37/24(2006.01)i, B44C 5/04(2006.01)i*

According to International Patent Classification (IPC) or to both national classification and IPC

**B. FIELDS SEARCHED**

Minimum documentation searched (classification system followed by classification symbols)

B32B 27/26; B29C 69/00; B29C 45/14; B44C 3/02; B44C 5/04; B32B 27/30; B32B 27/06; B32B 38/06; B32B 27/08; B32B 7/06; B32B 7/12; B32B 37/24

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: photo-curing, embossed layer, bonding layer, printing layer, vapor, decoration sheet, rotary screen

**C. DOCUMENTS CONSIDERED TO BE RELEVANT**

| Category* | Citation of document, with indication, where appropriate, of the relevant passages | Relevant to claim No. |
|---|---|---|
| Y | KR 10-2009-0074738 A (DAI NIPPON PRINTING CO., LTD.) 07 July 2009<br>See paragraphs [0057], [0058]; example 1; claim 1; and figure 1. | 1-19 |
| Y | KR 10-1995-0017167 A (LUCKY CORPORATION et al.) 20 July 1995<br>See claim 1; and figure 3. | 1-19 |
| Y | KR 10-2011-0077839 A (LG HAUSYS, LTD.) 07 July 2011<br>See claims 1, 4, 13; and figure 1. | 2-9,18-19 |
| A | KR 10-2010-0103010 A (LG HAUSYS, LTD.) 27 September 2010<br>See claim 1; and figure 1. | 1-19 |
| A | KR 10-2012-0055855 A (LG HAUSYS, LTD.) 01 June 2012<br>See claim 1; and figure 1. | 1-19 |

☐ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 20 APRIL 2016 (20.04.2016) | **22 APRIL 2016 (22.04.2016)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/000536**

| Patent document cited in search report | Publication date | Patent family member | Publication date |
|---|---|---|---|
| KR 10-2009-0074738 A | 07/07/2009 | CN 101516597 A | 26/08/2009 |
| | | EP 2067597 A1 | 10/06/2009 |
| | | EP 2067597 A4 | 16/11/2011 |
| | | JP 2008-105415 A | 08/05/2008 |
| | | JP 5194681 B2 | 08/05/2013 |
| | | KR 10-1423799 B1 | 25/07/2014 |
| | | US 2010-0196668 A1 | 05/08/2010 |
| | | US 2012-0228809 A1 | 13/09/2012 |
| | | US 8535595 B2 | 17/09/2013 |
| | | WO 2008-038725 A1 | 03/04/2008 |
| KR 10-1995-0017167 A | 20/07/1995 | KR 10-0158226 B1 | 15/01/1999 |
| KR 10-2011-0077839 A | 07/07/2011 | CN 102666094 A | 12/09/2012 |
| | | CN 102666094 B | 25/11/2015 |
| | | JP 2013-514914 A | 02/05/2013 |
| | | JP 5561840 B2 | 30/07/2014 |
| | | KR 10-1242330 B1 | 12/03/2013 |
| | | US 2012-0231223 A1 | 13/09/2012 |
| | | WO 2011-081446 A2 | 07/07/2011 |
| | | WO 2011-081446 A3 | 24/11/2011 |
| KR 10-2010-0103010 A | 27/09/2010 | GB 2468562 A | 15/09/2010 |
| | | GB 2468562 B | 29/05/2013 |
| | | KR 10-1261090 B1 | 06/05/2013 |
| | | WO 2010-104254 A1 | 16/09/2010 |
| KR 10-2012-0055855 A | 01/06/2012 | KR 10-1294397 B1 | 08/08/2013 |

Form PCT/ISA/210 (patent family annex) (January 2015)